# EUROPEAN PATENT APPLICATION

(11) **EP 4 414 920 A1**
(43) Date of publication of application: **14.08.2024**
(21) Application number: 23020074.3
(22) Date of filing: 13.02.2023
(51) Int. Cl.: G06Q 20/02, G06Q 20/10, G06Q 20/20, G06Q 20/38, G06Q 20/40

(54) **SYSTEM AND METHOD FOR ENABLING MULTI-CHANNEL, MULTI-CURRENCY INTERNATIONAL TRANSACTIONS FOR DOMESTIC PAYMENT SCHEMES**

(71) Applicant: Giesecke+Devrient ePayments GmbH, 81677 München (DE)
(72) Inventor: Patankar, Sanjiv, 411038 Pune (IN); Madhukar, Baji Makarand, 411021 Pune (IN)
(74) Representative: Giesecke+Devrient IP

(57) **Abstract**

The present invention relates to a system (100) for enabling multi-channel, multi-currency international transactions for domestic payment schemes. System (100) comprises central server (102) associated with an inter-transact HUB, domestic servers (104) associated with the domestic payment schemes, and payment modules (106). Central server (102) receives, from domestic servers (102), data pertaining to a transaction initiated by registered users (108) at payment modules (106) in one or more countries. Further, upon identification of international transaction details, the data is validated using cryptogram and encryption by payment modules (106). Central server (102) enables issuers (110) of registered user to initiate and complete transaction, in response to transaction request received from the identified domestic payment schemes. Finally, central server (102) facilitates domestic servers (104) associated with the issuer (110) of the user (108) to complete the transaction at the payment module (106) where the international transaction is initiated by the user (108).

## Description

### TECHNICAL FIELD

The present disclosure relates generally to the field of financial transactions. In particular, the present disclosure relates to a system and method for enabling multi-channel, multi-currency international transactions for domestic payment schemes.

### BACKGROUND

Background description includes information that may be useful in understanding the present invention. It is not an admission that any of the information provided herein is prior art or relevant to the presently claimed invention, or that any publication specifically or implicitly referenced is prior art.

Global financial transactions, also known as the international financial framework is an aggregation of various elements such as economies, regulations, domestic domain, financial institutions, and the way said elements interact with each other. For many businesses, individuals, and government agencies, making or receiving payments that cross borders is a necessary activity. Many businesses serve customers abroad and rely on buying goods from suppliers abroad but, in order to do so, they need to receive payments from customers of different locations and complete the transaction. In addition, global financial transactions target customers traveling abroad and use their domestic cards for payments and cash withdrawals using various payment methods. Similarly, many people depend on the ability to readily send or receive cross-border payments, such as migrants who send money to families in their home countries or individuals who make online purchases from foreign retailers. Global financial transactions involve more risks to manage, complexities to navigate, and rules to comply with than domestic payments.

In the past decade, emerging markets have increasingly embraced the payments ecosystem and have proven that their environment is fertile for new developments. The evolution of mobile money services, debit and credit cards, and online payment service platforms has demonstrated that these markets can stimulate the global financial expansion of businesses. Each of the different types of end users for cross-border retail payments has broadly different preferences, experiences, and challenges.

Existing Domestic Payment Schemes offer card-based payment that facilities using a domestic payment eco-system. Thus, existing Domestic Payment Schemes impose constraints such as the usage of mere cards by domestic scheme customers, and they are unable to perform international payments or payments using other domestic payment scheme ecosystems. Another constraint posed by the Domestic Payment Schemes is the mandatory tie-up with the international payment schemes (dual or multi-network/scheme cards) to facilitate cross-scheme payments including the same currency or cross-currency payments, which leads to expensive and dependent business models. Thereby, the Domestic Payment Schemes lose a big customer base who intend to use the card for international payments and pay higher fees to International schemes which have limited control over multi-currency exchange rates and margins. A monopoly of a handful of International payment schemes in this area makes domestic schemes dependent, thus democratization of payments cannot be implemented.

Various attempts have been made in the past in the field of international financial transactions, one of the patent applications US20200202332A1 titled Mobile payment roaming discloses the availability of Multi / Dual scheme endorsed payment cards (co-badging). The cited reference is restricted to tokenized card payments for online merchant transactions. Further, for every tokenization done for the cards, separate tokens are to be generated by all the schemes (remote tokens R-PAN) at the same time and manage their lifecycle. Another patent application WO2018108737A1 discloses a method for generating a cryptogram in a user device and verifying this cryptogram in a payment server, corresponding user device, and payment server depicts the existing EMV crypto generation and validation mechanism. The generated cryptogram in the user device is scheme specific and does not encourage payment between different schemes. Another patent application WO2022100078A1 discloses a Blockchain baas cross-border digital payment platform for smart supply chain, which enables interbank transactions, however, fails to implement card or token-based international transactions between domestic schemes.

There is, therefore, a requirement in the art for a means to overcome the above drawbacks, shortcomings, and limitations associated with existing international transactions for domestic payment schemes, and provide an improved and secured system and method for enabling multi-channel, multi-currency international transactions for domestic payment schemes.

### OBJECTS OF THE PRESENT DISCLOSURE

Some of the objects of the present disclosure, which at least one embodiment herein satisfy are as listed hereinbelow.

It is an object of the present disclosure to overcome the above drawbacks, shortcomings, and limitations associated with existing international transactions for domestic payment schemes.

It is a main object of the present disclosure to provide flexibility to domestic payment schemes to provide the customers with secure, affordable, seamless International and multi-currency cards, card-on-file, tokenized transaction processing, ATM transactions, and all other channels such as Host card emulation (HCE), embedded secured element (eSE), E-Commerce (eCOM), Quick Response (QR), and InApp channels.

It is an object of the present disclosure to provide a unified platform to connect worldwide domestic payment schemes for all card and online-based transactions.

It is an object of the present disclosure to implement a secured, specific cryptogram generation and verification by participating domestic schemes. Further, additional security artifact is provided for enabling end-to-end security.

It is an object of the present disclosure to provide an improved and secured platform for international transactions for domestic payment schemes including transactions and services such as payments, balance enquiry, reversals, advices, foreign exchange (FX) conversions, FX settlements, reporting, other services, but not limited to the like.

It is an object of the present disclosure to facilitate international financial transactions by providing better prices and favorable fees for domestic customers through domestic schemes.

It is an object of the present disclosure to enable efficient international financial transactions across borders and promote various online platforms.

It is an object of the present disclosure to extend the reach of domestic payment schemes outside of regional boundaries and make it acceptable across several countries for multi-currency transactions.

### SUMMARY

The main object and further objects of the present disclosure are achieved by any of the independent claims. Embodiments are set out in dependent claims. The present disclosure relates generally to the field of financial transactions. In particular, the present disclosure relates to a system and method for enabling multi-channel, multi-currency international transactions for domestic payment schemes.

An aspect of the present disclosure pertains to a system for enabling multi-channel, multi-currency international transactions for domestic payment schemes. The system comprises one or more domestic servers associated with one or more domestic payment schemes, where one or more issuers are associated with each of the domestic payment schemes. The one or more payment modules are associated with each of the domestic payment schemes, and the one or more payment modules are in communication with the corresponding domestic server. The system further comprises a central HUB comprising a central server in communication with the one or more domestic servers associated with the one or more domestic schemes to connect the one or more domestic payment schemes with the central HUB. The central server comprises a processor coupled to a memory storing instructions executable by the processor the central server is in communication with the one or more domestic servers. The central server is configured to receive the first set of secured transaction messages from the one or more domestic servers, and identify the domestic payment scheme based on the first set of secured transaction messages and the one or more issuers where the corresponding user initiating the transaction is associated with or registered. Further, the central server redirects the first set of secured transaction messages to the identified domestic payment scheme of the corresponding registered user. Further, the central server enables the identified domestic payment scheme of the corresponding registered user to send a transaction request to the issuer associated with one or more registered user. Furthermore, the central server enables the one or more issuers of the registered user to initiate and make payment, in response to the transaction request. The transaction comprises at least one of a financial transaction and a non-financial transaction Finally, the central server facilitates the one or more domestic servers associated with the one or more issuers of the registered user to complete the transaction at the payment module where the international transaction is initiated.

In yet another aspect, the one or more domestic servers are configured to identify the initiation of the international transaction by the registered user based on the transaction request received by the issuer of the registered user. Further, the one or more domestic servers process the first set of secured transaction messages to perform verification of the cryptogram and encryption associated with the transaction details and correspondingly generate a second set of secured transaction messages comprising a response cryptogram, and encryption envelope for the transaction made by the issuer in response to the transaction request.

In yet another aspect, the central server is configured to receive the second set of secured transaction messages from the domestic server associated with the issuer of the registered user. Further, identify, based on the second set of secured transaction messages, the domestic payment scheme and the respective domestic server of the respective payment module where the international transaction is initiated by the registered user or where the payment is to be made. Furthermore, the central server is configured to redirect the second set of secured transaction messages to the identified domestic server of the respective payment module where the international transaction is initiated or where the payment is to be made. Finally, the central server is configured to enable, based on the second set of secured transaction messages, the identified domestic payment scheme to complete the transaction at the respective payment module where the international transaction is initiated by the registered user.

In another aspect, the one or more payment modules are configured to allow the one or more registered users associated with the one or more issuers to initiate the transaction in the one or more countries. The one or more payment modules are configured to extract the transaction details upon initiation of the transaction by the one or more registered users at a corresponding payment module. The one or more payment modules are configured to recognize the initiation of the international transaction by the one or more registered users based on the extracted transaction details. Finally, the one or more payment modules are configured to generate cryptogram and encryption using the transaction details upon recognition of the international transaction initiation, and correspondingly generate and transmit the first set of secured transaction messages to the domestic server of the respective payment scheme where the international transaction is routed.

In an aspect, the payment module comprises any or a combination of a Point-of-Sale (POS) terminal and an ATM. The transaction made by the registered user is initiated at the payment module upon scanning and authentication of a registered card having unique identifiers at the respective payment modules

In an aspect, the payment module comprises any or a combination of an eCOM portal, a Payment gateway, a Payment wallet, a host card emulation (HCE), eSE, an InApp payment, a QR-based payment, and any tokenized payment, wherein a registered card of the user is authenticated and tokenized at the respective payment modules during card enablement, and the transaction made by the registered user is initiated at the payment module upon selection of the registered card and/or the tokenized card.

Another aspect of the present disclosure pertains to a method for enabling multi-channel, multi-currency international transactions for domestic payment schemes. The method may comprise a step of receiving, by a central server associated with a central HUB which is in communication with one or more domestic servers associated with one or more payment schemes, a first set of secured transaction messages from the one or more domestic servers. The first set of secured transaction messages pertains to a transaction initiated at one or more payment modules in one or more countries, where the first set of secured transaction messages is validated using cryptogram and encryption, based on the identification of international transaction details by the one or more payment modules. The method may further comprise a step of identifying, by the server, based on the first set of secured transaction messages, a domestic payment scheme, and the issuer where the corresponding user initiating the transaction is associated with or registered. The method may further comprise a step of redirecting, by the server, the first set of secured transaction messages to the identified domestic payment scheme of the corresponding registered user. The method may further comprise a step of enabling, by the server, the identified domestic payment scheme of the corresponding registered user to send a transaction request to the issuer associated with the registered user. The method may further comprise a step of enabling, by the server, the issuer of the registered user to initiate and make payment in response to the transaction request. The transaction comprises at least one of a financial transaction and a non-financial transaction. Finally, the method may further comprise a step of facilitating, by the server, the domestic server associated with the issuer of the registered user to complete the transaction at the payment module where the international transaction is initiated.

In an aspect, the method comprises the steps of identifying, by the one or more domestic servers, the initiation of the international transaction by the registered user based on the transaction request received at the issuer of the registered user, and processing, by the one or more domestic servers, the first set of secured transaction messages to perform verification of the cryptogram and encryption associated with the transaction details and correspondingly generating a second set of secured transaction messages comprising a response cryptogram, and encryption envelope for the transaction made by the issuer in response to the transaction request.

In an aspect, the method comprises the steps of receiving, by the central server, the second set of secured transaction messages from the domestic server associated with the issuer of the registered user; identifying, by the central server, based on the second set of secured transaction messages, the domestic payment scheme and the respective domestic server of the respective payment module where the international transaction is initiated by the registered user; redirecting, by the central server, the second set of secured transaction messages to the identified domestic server of the respective payment module where the international transaction is initiated; and enabling, by the central server, based on the second set of secured transaction messages, the identified domestic payment scheme to complete the transaction at the respective payment module where the international transaction is initiated by the registered user.

In an aspect, the method comprises the steps of allowing, at the one or more payment modules associated with the one or more domestic payment schemes, the one or more registered users associated with the one or more issuers of the one or more domestic payment schemes to initiate the transaction in the one or more countries; extracting, by the one or more payment modules, the transaction details upon initiation of the transaction by the one or more registered users at the corresponding payment module; recognizing, by the one or more payment modules, initiation of the international transaction by the one or more registered users based on the extracted transaction details; and generation, by the one or more payment modules, cryptogram and encryption using the transaction details upon recognition of the international transaction initiation, and correspondingly generating and transmitting the first set of secured transaction messages to the domestic server of the respective payment module where the international transaction is initiated.

Thus, the present disclosure provides an improved and secured system and method for enabling multi-channel, multi-currency international transactions for domestic payment schemes, without the requirement of multiple cards for international transactions.

Various objects, features, aspects, and advantages of the present disclosure will become more apparent from the following detailed description of preferred embodiments, along with the accompanying drawing figures in which like numerals represent like features.

Within the scope of this application, it is expressly envisaged that the various aspects, embodiments, examples and alternatives set out in the preceding paragraphs, in the claims and/or in the following description and drawings, and in particular the individual features thereof, may be taken independently or in any combination. Features described in connection with one embodiment are applicable to all embodiments, unless such features are incompatible

### BRIEF DESCRIPTION OF DRAWINGS

The accompanying drawings are included to provide a further understanding of the present invention and are incorporated in and constitute a part of this specification. The drawings illustrate exemplary embodiments of the present invention and, together with the description,
FIGs. 1A and 1B illustrate an exemplary network architecture of the proposed system for enabling multi-channel, multi-currency international transactions for domestic payment schemes, in accordance with an embodiment of the present disclosure.
FIG. 2 illustrates exemplary functional modules of the central server of the proposed system, in accordance with an embodiment of the present disclosure.
FIGs. 3A-3D illustrates an exemplary flow diagram of the proposed method for enabling multi-channel, multi-currency international transactions for domestic payment schemes, in accordance with an embodiment of the present disclosure.
FIG. 4 illustrates an exemplary computer system in which or with which the central server of the proposed system can be utilized, in accordance with embodiments of the present disclosure.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

In the following description, numerous specific details are set forth in order to provide a thorough understanding of embodiments of the present invention. It will be apparent to one skilled in the art that embodiments of the present invention may be practiced without some of these specific details.

Embodiments of the present invention include various steps, which will be described below. The steps may be performed by hardware components or may be embodied in machine-executable instructions, which may be used to cause a general-purpose or special-purpose processor programmed with the instructions to perform the steps. Alternatively, steps may be performed by a combination of hardware, software, and firmware and/or by human operators.

The present disclosure relates generally to the field of financial transactions. In particular, the present disclosure relates to a system and method for enabling multi-channel, multi-currency international transactions for domestic payment schemes.

In an aspect of the present disclosure, a system for enabling multi-channel, multi-currency international transactions for domestic payment schemes is disclosed. The system can include one or more domestic servers associated with one or more domestic payment schemes, where one or more issuers are associated with each of the domestic payment schemes. The one or more payment modules can be associated with each of the domestic payment schemes, and the one or more payment modules can be in communication with the corresponding domestic server. The system can further include a central server in communication with the one or more domestic servers. The central server can include a processor coupled to a memory storing instructions executable by the processor. The central server can be configured to receive the first set of secured transaction messages from the one or more domestic servers, and identify the domestic payment scheme based on the first set of secured transaction messages and the one or more issuers where the corresponding user initiating the transaction is associated with or registered. Further, the central server can redirect the first set of secured transaction messages to the identified domestic payment scheme of the corresponding registered user. Further, the central server can enable the identified domestic payment scheme of the corresponding registered user to send a transaction request to the issuer associated with one or more registered users. Furthermore, the central server can enable the one or more issuers of the registered user to initiate and make payment, in response to the transaction request. The transaction comprises at least one of a financial transaction and a non-financial transaction Finally, the central server can facilitate the one or more domestic servers associated with the one or more issuers of the registered user to complete the transaction to the registered user at the payment module where the international transaction is initiated.

In another aspect of the present disclosure, a method for enabling multi-channel, multi-currency international transactions for domestic payment schemes is disclosed. The method can include a step of receiving, by a central server in communication with one or more domestic servers, a first set of secured transaction messages from the one or more domestic servers. The first set of secured transaction messages pertains to a transaction initiated at one or more payment modules in one or more countries, where the first set of secured transaction messages can be validated using cryptogram and encryption, based on the identification of international transaction details by the one or more payment modules. The method can further include a step of identifying, by the server, based on the first set of secured transaction messages, a domestic payment scheme, and the issuer where the corresponding user initiating the transaction is associated with or registered. The method can further include a step of redirecting, by the server, the first set of secured transaction messages to the identified domestic payment scheme of the corresponding registered user. The method can further include a step of enabling, by the server, the identified domestic payment scheme of the corresponding registered user to send a transaction request to the issuer associated with the registered user. The method can further include a step of enabling, by the server, the issuer of the registered user to initiate and make payment in response to the transaction request. The transaction comprises at least one of a financial transaction and a non-financial transaction. Finally, the method can further include a step of facilitating, by the server, the domestic server associated with the issuer of the registered user to complete the transaction at the payment module where the international transaction is initiated.

In an embodiment, the one or more domestic servers can be configured to identify the initiation of the international transaction by the registered user based on the transaction request received by the issuer of the registered user. Further, the one or more domestic servers associated with the issuer can process the first set of secured transaction messages to perform verification of the cryptogram and encryption associated with the transaction details and correspondingly generate a second set of secured transaction messages comprising a response cryptogram, and encryption envelope for the transaction made by the issuer in response to the transaction request.

In an embodiment, the central server can be configured to receive the second set of secured transaction messages from the domestic server associated with the issuer of the registered user. Further, the central server can identify, based on the second set of secured transaction messages, the domestic payment scheme and the respective domestic server of the respective payment module where the international transaction is initiated by the registered user or where the payment is to be made. Furthermore, the central server can be configured to redirect the second set of secured transaction messages to the identified domestic server of the respective payment module where the international transaction is initiated or where the payment is to be made. Finally, the central server can be configured to enable, based on the second set of secured transaction messages, the identified domestic payment scheme to complete the transaction at the respective payment module where the international transaction is initiated by the registered user.

In an embodiment, the one or more payment modules can be configured to allow the one or more registered users associated with the one or more issuers to initiate the transaction in the one or more countries. The one or more payment modules can be configured to extract the transaction details upon initiation of the transaction by the one or more registered users at a corresponding payment module. The one or more payment modules can be configured to recognize the initiation of the international transaction by the one or more registered users based on the extracted transaction details. Finally, the one or more payment modules can be configured to generate cryptogram and encryption using the transaction details upon recognition of the international transaction initiation, and correspondingly generate and transmit the first set of secured transaction messages to the domestic server of the respective payment module where the international transaction is routed.

In an embodiment, the payment module can include any or a combination of a Point-of-Sale (POS) terminal and ATM. The transaction made by the registered user is initiated at the payment module upon scanning and authentication of a registered card having unique identifiers at the respective payment modules

In an embodiment, the payment module can include any or a combination of an eCOM portal, a Payment gateway, a Payment wallet, a host card emulation (HCE), an InApp payment, a QR-based payment, and any tokenized payment, where a registered card of the user is authenticated and tokenized at the respective payment modules during card enablement, and the transaction made by the registered user can be initiated at the payment module upon selection of the registered card and/or the tokenized card.

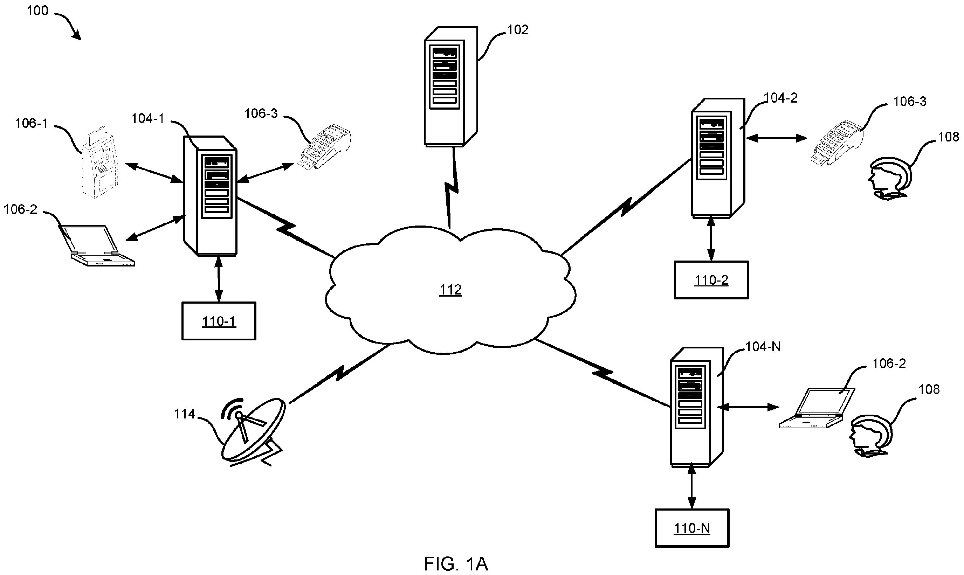

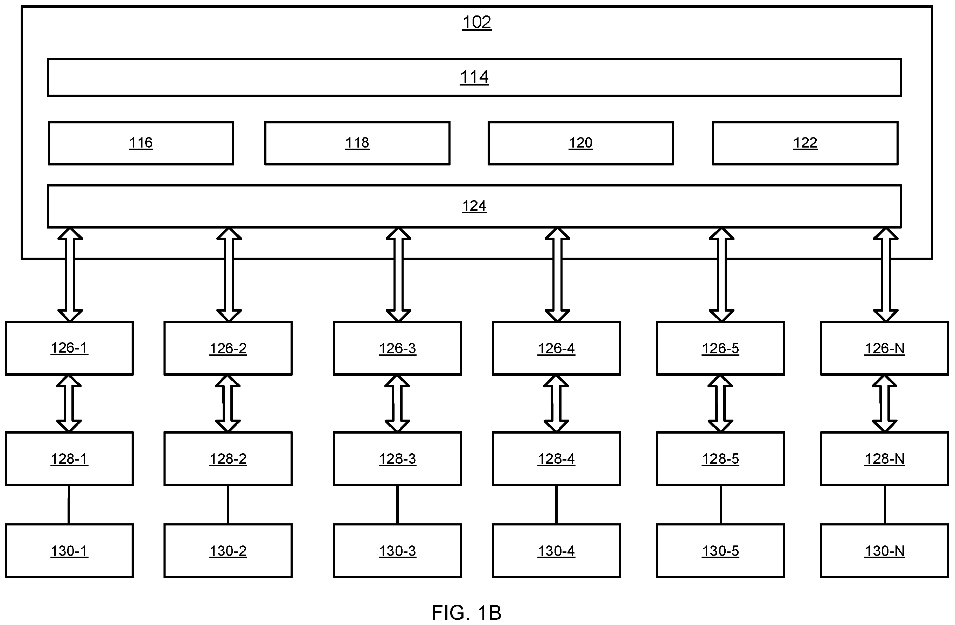

Referring to FIGs. 1A and 1B, the exemplary network architecture of the proposed system 100 for enabling multi-channel, multi-currency international transactions for domestic payment schemes is disclosed. The proposed system 100 can include a central HUB (also referred to as central inter-transact HUB 102, herein) comprising a central server 102, and one or more domestic servers 104-1, 104-2,...,104-N (collectively designated as 104) associated with one or more domestic payment schemes 126-1, 126-2,..., 126-N (collectively designated as 126) of one or more countries. The system 100 connects the domestic payment schemes 126 to the central HUB that is responsible for interconnection and payments between multiple domestic payment schemes in multiple countries/regions in multiple currencies. Further, the system 100 can include one or more payment modules (106-1, 106-2, 106-N) (collectively designated as 106) that can be associated with the one or more domestic payment schemes (126). Each of the domestic servers 104 can be in communication with the central server 102 and the payment modules 106 can be in communication with the corresponding domestic server 104. The system 100 can further involve users 108 associated with or registered with one or more issuers (110-1, 110-2, 110-N) (collectively designated as 110) that may be associated with one of the domestic payment schemes 126. The payment modules 106 can enable the users 108 to initiate and make domestic as well as international transactions in the one or more countries.

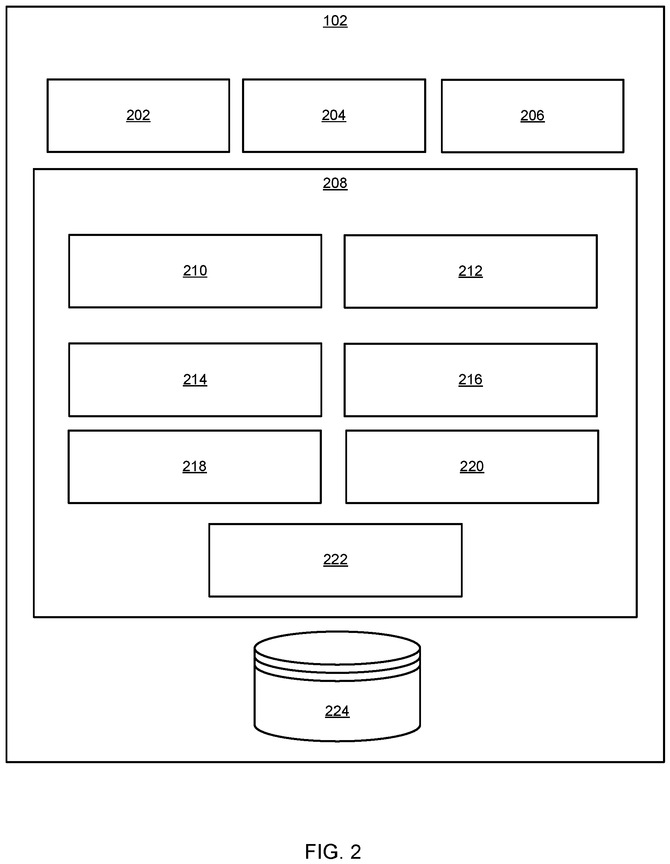

The central server 102, the one or more domestic servers 104, and a network connection module 114 can be in communication with each other through a network 112. The satellite 114 enables deploying, configuring, and maintaining the communication of the central server 102 and the domestic servers 104 across environments. Further, the central server 102 can include a switching module 114, a regional processing module 116, a settlement module 118, a compliance module 120, a backend module 122, and an Application Programming Interference (API) Integration module 124. The detailed operation and functional modules of the central server 102 are described further in conjunction with FIG. 2.

In an embodiment, the proposed system 100 can be configured to enable multi-channel, multi-currency international transactions for domestic payment schemes. The proposed system 100 can be configured to process card-based transactions as well as tokenized online transactions, by adapting secure mechanisms including cryptogram and encryption. Further, the proposed system 100 extracts and utilizes international transaction details upon recognizing the initiation of an international transaction by the users 108 at any of the payment modules 106 and further enables multi-channel, multi-currency international transactions in multiple countries. Thereby, the proposed system 100 executes seamless international transactions of the registered users 108, irrespective of the countries and the domestic payment schemes 126. The registration of users 108 is conducted at the issuer end, and the issuer 110 registers the user 108 to appropriate domestic schemes 126 and provides a card to the user 108 (also known as cardholder 108, herein).

In an embodiment, the central server 102 can be configured to facilitate the international transaction by the domestic servers 104 associated with the issuer 110 of the registered cardholder 108 in one country to complete the transaction made by the registered cardholder 108 at the payment module 106 in another country where the international transaction is initiated. The central server 102 can be configured to operate as a communication bridge between the domestic servers 104 associated with multiple issuers 110 in different countries. Further, the central server 102 can be configured to complete a successful transaction to the cardholder 108 at the payment module 106, irrespective of the countries in which the cardholder has initiated the transaction.

In an embodiment, the payment module 106 can include, but is not limited to an eCOM portal, a Payment gateway, a payment wallet, a host card emulation (HCE), an InApp payment, a QR-based payment, and the like. Further, the payment modules 106 can include card-based platforms including but not limited to a Point-of-Sale (POS) terminal, an ATM, and the like. In an embodiment, the domestic servers 104 can be configured to identify the initiation of the international transaction by the cardholder 108 upon initiation of the international transaction at any of the payment modules 106 and the corresponding transaction request received by the domestic payment scheme 126 associated with the respective payment module 106. The transaction comprises at least one of a financial transaction and a non-financial transaction

In an embodiment, the switching module 114 (also known as a switching layer 114, herein) of the server 102 can be configured to route one or more requests between the domestic payment schemes 126. In addition, the switching module module 114 can be configured to perform secured identification of the domestic payment schemes 126 of the one or more countries. The regional processing module 116 (also known as a regional processor 116, herein) of the server 102 can be configured to handle all the requests and responses from domestic payment schemes 126. Further, secured routing of the requests and responses to/from the respective payment module 106 can be achieved by the central HUB.

In an embodiment, the settlement module 118 (also known as business tier, herein) of the server 102 can be configured to handle the foreign currency exchange transactions, which involves the required Forex conversion, handling charge, and the like. Further, the compliance module 120 of the server 102 can be configured to handle the standards, rules and regulations pertaining to the one or more countries. For instance, any local/global standards can be accomplished by the compliance module 120, such that the cardholder 108 can seamlessly operate in the one or more countries.

In an embodiment, the backend module 122 of the server 102 can be configured to perform various activities such as reporting, billing, scheduling, and the like. For instance, the backend module 122 provides a detailed report of the number of international transactions performed in a day. In addition, the report includes the total payment and the scheduled date of payment to be made.

In an embodiment, the API Integration module 124 can be configured to manage the transactions of the domestic payment schemes 126. The API Integration module 124 is a unified and secured layer which is the integration point for all the domestic payment schemes 126 associated with the central server 102. The domestic payment schemes 126 can be configured to deploy a plug-in and integrate the solution with the central HUB and the corresponding central server 102 through the standard APIs.

In an embodiment, the domestic payment scheme 126 can be configured to manage transactions related to online platforms that allow businesses to conduct interactions and transactions with customers and suppliers instantly, by facilitating an intuitive and connected operation.

In an embodiment, the system may involve one or more local ECO systems 128-1, 128-2,...,128-N (collectively designated as 128) associated with each of the domestic payment schemes 126. The local ecosystem 128 can include the entities 130 operating in the environment. The entities 130 associated with the ECO system 128 can include Issuers, Acquires, POS, Payment gateways, eCOM, HCE, Ese, QR system, and the like.

In an embodiment, the registered users 108 can be registered in the issuers by providing the necessary details. The issuers 110 can perform the authentication process and provide the cardholder 108 with a registered card and online payment authorization, which can be used at payment modules 106 to make transactions.

In an embodiment, the each of the payment modules 106 can be configured to allow the cardholder 108 to initiate the transaction in the one or more countries. Further, each of the payment modules 106 can be configured to extract the transaction details upon initiation of the transaction by the cardholder 108 at the corresponding payment module 106. The each of the payment modules 106 can be configured to recognize the initiation of the international transaction by the cardholder 108 based on the extracted transaction details. Finally, each of the payment modules 106 can be configured to generate cryptogram and encryption by the card upon recognition of the international transaction initiation, and correspondingly generate and transmit a first set of secured transaction messages to the domestic server 104 of the respective payment module 106 where the international transaction is initiated.

In an implementation, the payment modules 106 can include, but is not limited to the Point-of-Sale (POS) terminal, the ATM, and the like. Further, the transaction made by the cardholder 108 can be initiated at the payment module 106 upon scanning and authentication of the registered card having unique identifiers at the respective payment modules 106, however, the transaction can also be initiated upon authentication of the cardholder 108 by any other secured methods as well without any limitation.

In another implementation, the payment module 106 may include, but is not limited to an eCOM portal, a Payment gateway, a wallet, a Host Card Emulation (HCE), an InApp payment, and a QR-based payment. The registered card of the cardholder 108 can be authenticated and tokenized at the respective payment modules 106 during card enablement, and the transaction made by the cardholder 108 is initiated at the payment module upon selection of the registered card and/or the tokenized card.

The central server 102 can include a processor 202 coupled to a memory 204 storing instructions executable by the processor 202 as shown in FIG. 2. The central server can be configured to receive the first set of secured transaction messages from the domestic servers 102, and identify the domestic payment scheme based on the first set of secured transaction messages and the issuer 110 where the corresponding cardholder initiating the transaction is associated or registered. Further, the central server 102 can redirect the first set of secured transaction messages to the identified domestic payment scheme of the corresponding cardholder. Further, the central server 102 can enable the identified domestic payment scheme of the corresponding cardholder 108 to send a transaction request to the issuer 110 associated with the cardholder 108. Furthermore, the central server 102 can enable the issuers 110 of the cardholder 108 to initiate and make payment, in response to the transaction request. Finally, the central server 102 can facilitate the domestic servers 104 associated with the issuer 110 of the cardholder 108 to complete the transaction at the payment module 106 where the international transaction was initiated.

Further, the domestic servers 104 can be configured to identify the initiation of the international transaction by the cardholder108 based on the transaction request received at the issuer 110 of the cardholder 108. The domestic servers 104 can be configured to process the first set of secured transaction messages to perform verification of the cryptogram and encryption associated with the transaction details and correspondingly generate a second set of secured transaction messages. The second set of secured transaction messages can include a response cryptogram and encryption envelope for the transaction made by the issuer 110 in response to the transaction request.

Further, the central server 102 can be configured to receive the second set of secured transaction messages from the domestic servers 104 associated with the issuer 110 of the cardholder 108. The central server 102 can identify the domestic payment scheme 128 based on the second set of secured transaction messages, and the respective domestic server 104 of the respective payment module 106 where the international transaction is initiated by the cardholder or where the payment is to be made. The central server 102 can accordingly redirect the second set of secured transaction messages to the identified domestic server of the respective payment module 106 where the international transaction is initiated or where the payment is to be made. Finally, the central server 102 can enable the identified domestic payment scheme 128, based on the second set of secured transaction messages, to complete the transaction at the respective payment module 128 where the international transaction was initiated by the cardholder 108.

In an implementation, the proposed system 100 can enable multi-channel, multi-currency international transactions for different domestic payment schemes 126 by using card transaction methods. Initially, the issuers 110 can issue a domestic scheme's specialized card to the cardholder 108 which can be enabled for international payments. The card can be endorsed with services provided by the central server 102 which can be capable of generating specialized cryptograms and participating in the inter-scheme ecosystem for switching and transaction. Further, the cardholder 108 can swipe the card at the payment modules 106 in any of the countries. The payment modules 106 can be configured to use specified fields of the card to recognize the transaction. The registered card can be configured to generate the cryptogram and encryption during the transaction and use the transaction information in future transactions. Further, the acquirer bank can be configured to recognize the domestic payment scheme, cryptogram along with response encryption and/or token as the international transaction details and forward to the domestic payment scheme 126. Further, the domestic payment scheme 126 can forward the details to the central server 102, where the message along with cryptogram, encryption, and token (if used) is redirected to the card issuer's 110 domestic payment scheme 126 using identifiers in the message. Furthermore, the issuer bank's domestic payment scheme 126 can send transaction requests to the respective card issuer bank. The issuer bank can identify the international payment and perform cryptograms and encryption verification using standard methods defined by the central server 102 and processes the transaction. Further, a response cryptogram, encryption envelope and message for the transaction by the issuer bank can be generated by the central server 102, and the transaction details can be sent back to the payment module 106 using the same path in which the transaction request was received. Finally, the transaction can be completed at the respective payment module 106 as explained in the above paragraphs.

In another implementation, the proposed system 100 can enable multi-channel, multi-currency international transactions for domestic payment using online payment methods. Initially, the issuers 110 can issue a domestic scheme's specialized card to the cardholder which can be enabled for international payments. The card can be endorsed with services provided by the central server 102 which is capable of generating specialized cryptograms and participating in the inter-scheme ecosystem for switching and transaction. Further, the cardholder 108 can enable the card for eCOM, Payment GW, wallet, HCE, eSE, InApp, QR or any such channels for transactions. These cards may get tokenized during card enablement. During transaction processing, the cardholder 108 can select the card on the channel interface or use tokenized payment methods for international transactions. These channels (eCOM, wallet, HCE, and the like.) can create or fetch cryptograms and encryption from the domestic scheme. Further, the acquirer bank can be configured to recognize the domestic payment scheme 126, cryptogram along with response encryption and/or token as the international transaction details and forwards to the domestic payment scheme 126. Further, the domestic payment scheme 126 can forward the details to the central server 102, where the message along with cryptogram, encryption, and token can be redirected to the card issuer's domestic scheme using identifiers in the message. Furthermore, the issuer bank's domestic scheme can send transaction requests to the respective card issuer bank. The issuer bank can identify the international payment and perform cryptograms and encryption verification using standard methods defined by the central server 102 and processes the transaction. Further, a response cryptogram, encryption envelope and message for the transaction may be generated by the issuer bank using the central server 102, and the transaction details can be sent back to the payment module 106 using the same path in which the transaction request was received. Finally, the transaction is completed at the respective payment module 106.

In an exemplary implementation, a sample case is disclosed, where the proposed system 100 can enable the international transaction initiated by the cardholder 108 between a first country and a second country (Multi-country, Multi-Currency Transaction by local schemes). The cardholder 108 can be registered with an issuer 110 or domestic payment scheme in the first country. The cardholder 108 can initiate the international transaction in the second country by using his/her registered card at any of the payment modules 106 in the second country. The acquirer bank of the payment module 106 (where the transaction is initiated) in the second country can recognize the domestic payment scheme, cryptogram, encryption, and/or token (if used) as an international transaction and forward the whole transaction details to the domestic payment scheme 126 associated with the payment module (where the transaction is initiated) in the second country. Further, the domestic payment scheme 126 associated with the payment module (where the transaction is initiated) can forward the whole transaction details to the central server 102. The central server 102 can receive the transaction details and redirect the message along with cryptogram, encryption, and token (if used) to the card issuer's 110 domestic scheme in the first country using identifiers in the message. Furthermore, the issuer bank in the first country can identify the international payment and perform cryptograms and encryption verification using standard methods defined by the central server 102 and processes the transaction, followed by, the generation of a response cryptogram, encryption envelope, and message for the payment initiated by the issuer bank using the central server 102. Further, the payment details can be sent back to payment module 106 where the transaction was initially initiated, using the same path in which the transaction request was received. Finally, the transaction can be completed at the respective payment module 106.

Further, the network 112 can be a wireless network, a wired network, or a combination thereof that is implemented as one of the different types of networks, such as Mobile GSM network, Intranet, Local Area Network (LAN), Wide Area Network (WAN), Internet, and any futuristic method of communication/connectivity as the case may be. Further, network 112 is either a dedicated network or a shared network. The shared network represents an association of the different types of networks that uses a variety of protocols, for example, Hypertext Transfer Protocol (HTTP), Transmission Control Protocol/Internet Protocol (TCP/IP), Wireless Application Protocol (WAP), and the like.

Referring to FIG. 2, the central server 102 may comprise one or more processor(s) 202. The one or more processor(s) 202 may be implemented as one or more microprocessors, microcomputers, microcontrollers, edge or fog microcontrollers, digital signal processors, central processing units, logic circuitries, and/or any devices that process data based on operational instructions. Among other capabilities, the one or more processor(s) 202 may be configured to fetch and execute computer-readable instructions stored in a memory 204 of the central server 102. The memory 204 may be configured to store one or more computer-readable instructions or routines in a non-transitory computer readable storage medium, which may be fetched and executed to create or share secured transaction messages over a network service. The memory 204 may comprise any non-transitory storage device including, for example, volatile memory such as Random Access Memory (RAM), or non-volatile memory such as Erasable Programmable Read-Only Memory (EPROM), flash memory, and the like.

The central server 102 may include an interface(s) 206. The interface(s) (206) may comprise a variety of interfaces, for example, interfaces for data input and output devices, referred to as I/O devices, storage devices, and the like. The interface(s) 206 may facilitate communication to/from the central server 102. The interface(s) 206 may also provide a communication pathway for one or more components of the central server 102. Examples of such components include, but are not limited to, processing unit/engine(s) 208 and a database 226.

In an embodiment, the processing unit/engine(s) 208 may be implemented as a combination of hardware and programming (for example, programmable instructions) to implement one or more functionalities of the processing engine(s) 208. In examples described herein, such combinations of hardware and programming may be implemented in several different ways. For example, the programming for the processing engine(s) 208 may be processor-executable instructions stored on a non-transitory machine-readable storage medium and the hardware for the processing engine(s) 208 may comprise a processing resource (for example, one or more processors), to execute such instructions. In the present examples, the machine-readable storage medium may store instructions that, when executed by the processing resource, implement the processing engine(s) 208. In such examples, the central server 102 may comprise the machine-readable storage medium storing the instructions and the processing resource to execute the instructions, or the machine-readable storage medium may be separate but accessible to the central server 102 and the processing resource. In other examples, the processing engine(s) 208 may be implemented by electronic circuitry.

In an embodiment, the database 224 may comprise data that may be either stored or generated as a result of functionalities implemented by any of the components of the processor 202 or the processing engines 208. In an embodiment, the database 224 may be separate from the system 102.

In an exemplary embodiment, the processing engine 208 may include one or more engines selected from any of a switching unit 210, an API integration unit 212, a domestic payment unit 214, a payment unit 216, a request processing unit 218, a compliance and Reporting unit 220, a Cryptogram and Encryption unit 222, and other units may include but not limited to the testing unit, storage unit and the like. The processing engine 208 may further be dedicated to executing complex schematic processing but not limited to the like.

In an embodiment, the switching unit 210 can be configured to route one or more requests between the domestic payment schemes 126. In addition, the switching unit 210 can be configured to perform secured identification of the domestic payment schemes 126 of the one or more countries. In an embodiment, the API integration unit 212 can be configured to manage the transactions of the one or more domestic payment schemes 126. The API Integration module 212 can be a unified and secured layer which is the integration point for all the domestic payment schemes 126 associated with the central server 102. The domestic payment schemes 126 can be configured to deploy a plug-in and integrate the solution with the central server 102 through the standard APIs. Further, any existing and futuristic encryption and security methods may be employed here, and any message format or any message encryption/security as defined by central server 102 may be employed here.

In an embodiment, the domestic payment unit 214 can be configured to manage transactions related to online platforms that allow businesses to conduct interactions and transactions with customers and suppliers instantly, by facilitating an intuitive and connected operation. In an embodiment, the payment unit 216 can be configured to enable the cardholder 108 associated with the issuers to initiate the transaction in different countries. The payment modules 106 can be associated with the domestic payment schemes 126. Further, the cardholder 108 can utilize the payment modules 106 to make domestic or international transactions. In an embodiment, the compliance and reporting unit 222 can be configured to handle the standards, rules and regulations pertaining to the one or more countries. For instance, any local/global standards are accomplished by the compliance module 120, such that the cardholder 108 can seamlessly operate in different countries by including repetitive payments using scheme-based mandates.

In an embodiment, the Cryptogram and Encryption unit 224 can be configured to generate and validate cryptogram and encryption using the transaction details by the payment module upon recognition of the international transaction initiation. Unique cryptogram standards, security, and encryption are recognized across domestic schemes/issuers with issuer identification techniques for interoperable transactions without the requirement of issuing dual or multi-network cards.

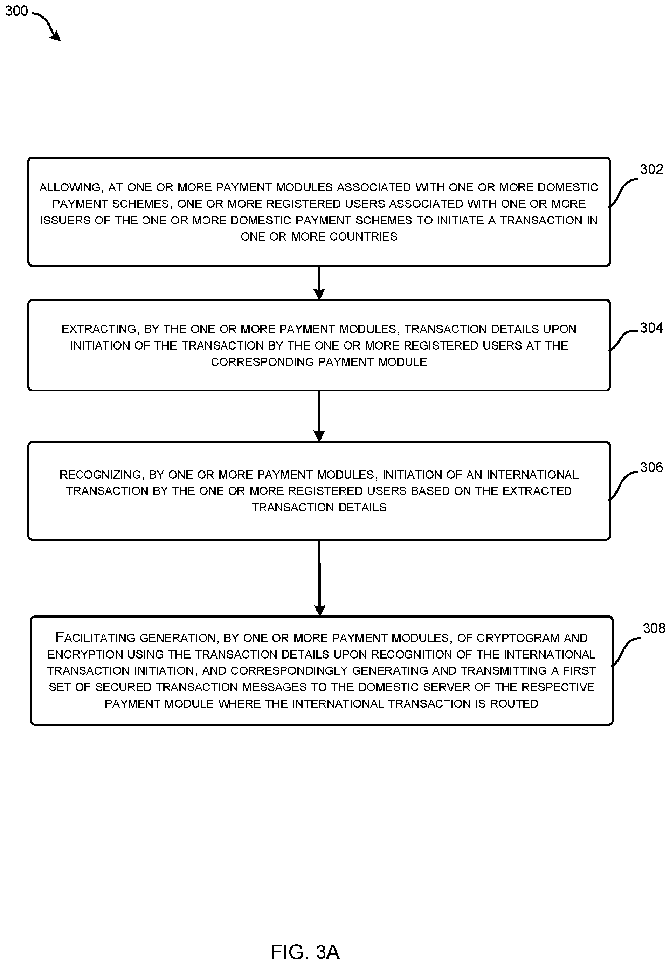

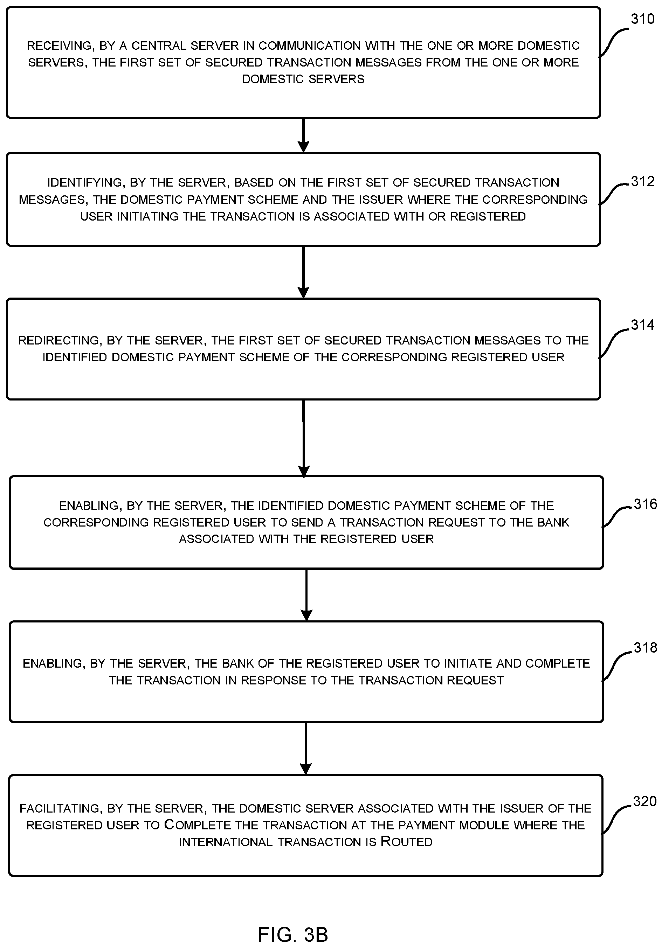

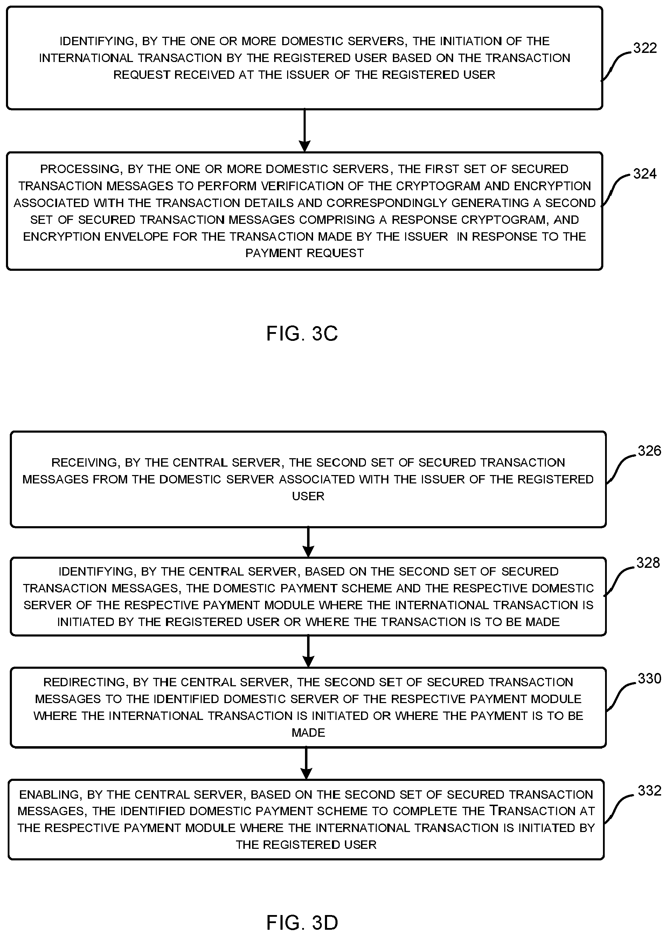

Referring to FIGs. 3A-3D, exemplary flow diagram of the proposed method for enabling multi-channel, multi-currency international transactions for domestic payment schemes is disclosed. Method 300 includes step 302 of allowing, at one or more payment modules associated with one or more domestic payment schemes, one or more registered users (cardholders) associated with one or more issuers of the one or more domestic payment schemes to initiate a transaction in one or more countries. Further, at step 304, method 300 includes extracting, by the one or more payment modules, transaction details upon initiation of the transaction by the one or more registered users at the corresponding payment module. At step 306, method 300 includes recognizing, by the one or more payment modules, the initiation of the international transaction by the one or more registered users based on the transaction details extracted at step 304. Furthermore, at step 308, method 300 includes generating, by the one or more payment modules, cryptogram and encryption using the transaction details of step 304 upon recognition of the international transaction initiation, and correspondingly generating and transmitting a first set of secured transaction messages to the domestic server of the respective payment module where the international transaction is initiated.

In an embodiment, at step 310, method 300 includes receiving, by a central server associated with a central HUB that can be in communication with the one or more domestic servers associated with the domestic payment schemes, the first set of secured transaction messages generated by the one or more domestic servers at step 308. Further, at step 312, method 300 includes identifying, by the central server, based on the first set of secured transaction messages, and the domestic payment scheme and the issuer where the corresponding user initiating the transaction is associated with or registered. At step 314, method 300 includes redirecting, by the central server, the first set of secured transaction messages to the domestic payment scheme of the corresponding registered user identified at step 312. Furthermore, at step 316, method 300 includes enabling, by the central server, the identified domestic payment scheme of the corresponding registered user to send a transaction request to the issuer associated with the registered user. At step 318, method 300 includes enabling, by the central server, the issuer of the registered user to initiate and make payment in response to the transaction request made at step 316. Furthermore, at step 320, method 300 includes facilitating, by the central server, the domestic server associated with the issuer of the registered user to complete the transaction at the payment module where the international transaction was initiated at step 302.

In an embodiment, method 300 includes step 322 of identifying, by the one or more domestic servers, the initiation of the international transaction by the registered user based on the transaction request received at the issuer of the registered user. Further, at step 324, method 300 includes processing, by the one or more domestic servers, the first set of secured transaction messages to perform verification of the cryptogram and encryption associated with the transaction details and correspondingly generating a second set of secured transaction messages comprising a response cryptogram, and encryption envelope for the transaction made by the issuer in response to the transaction request.

In an embodiment, method 300 includes step 326 of receiving, by the central server, the second set of secured transaction messages generated by the one or more domestic servers at step 324. Further, at step 328, method 300 includes identifying, by the central server, based on the second set of secured transaction messages, the domestic payment scheme and the respective domestic server of the respective payment module where the international transaction is initiated by the registered user or where the payment is to be made. At step 330, redirecting, by the central server, the second set of secured transaction messages to the identified domestic server of the respective payment module where the international transaction is initiated or where the payment is to be made. Furthermore, at step 322, method 300 includes enabling, by the central server, the identified domestic payment scheme to complete the transaction at the respective payment module where the international transaction is initiated by the registered user.

Those skilled in the art would appreciate that the central HUB or central inter-transact HUB is a centralized platform that facilitates interconnection and transaction between domestic payment schemes or payment networks in multiple countries/regions in multiple currencies. The central HUB acts as a bridge between the sender and recipient domestic payment schemes, enabling financial and non-financial transactions across borders in a secure, efficient, and reliable manner. The central HUB ensures that the payment is processed accurately and in compliance with relevant regulations and standards. It also helps to streamline the transaction process by reducing the number of intermediaries involved, thus reducing the time and cost of cross-border transactions. Further, the domestic payment scheme is a payment system within a country that facilitates the financial and non-financial transactions between individuals, businesses, and other entities within the same country. The main purpose of a domestic payment scheme is to provide a convenient and efficient way for card holders to exchange money within the country, while ensuring the security and reliability of the transactions.

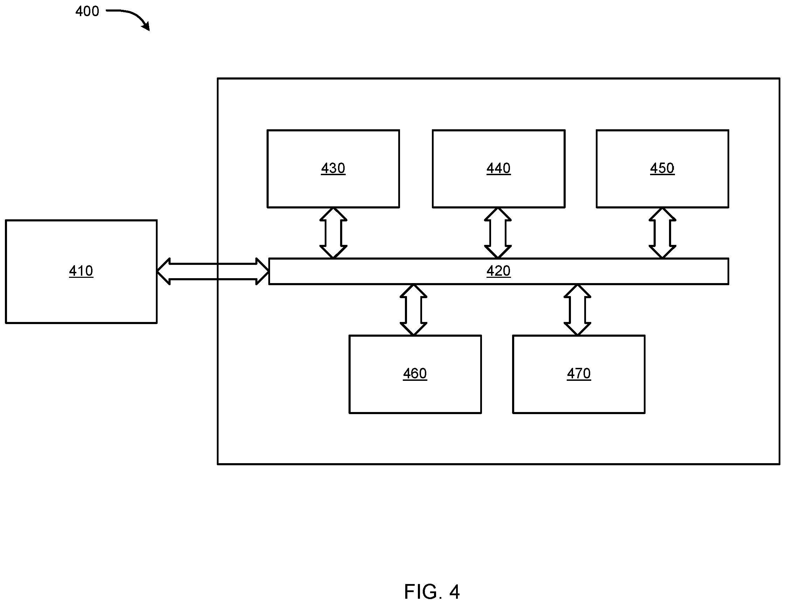

Referring to FIG. 4, a computer system 400 in which or with which the computing device of the service provider, enabling multi-channel, multi-currency international transactions for domestic payment schemes of the proposed system 100 and method 300 can be utilized or implemented is disclosed. The computer system 400 includes an external storage device 410, a bus 420, a main memory 430, a read-only memory 440, a mass storage device 460, a communication port 460, and a processor(s) 470. The processor 470 is implemented as one or more microprocessors, microcomputers, microcontrollers, digital signal processors, central processing units, logic circuitries, and/or any devices that manipulate data based on operational instructions. Among other capabilities, processor(s) 470 are configured to fetch and execute computer-readable instructions stored in a memory of the sink device. The memory 440 stores one or more computer-readable instructions or routines, which are fetched and executed to create or share the data units over a network service. Memory 430, 440 comprise any non-transitory storage device comprising, for example, volatile memory such as RAM, or non-volatile memory such as EPROM, flash memory, and the like.

In an embodiment, the computer system 400 also comprises an interface(s). The interface(s) comprises a variety of interfaces, for example, interfaces for data input and output devices referred to as I/O devices, storage devices, and the like. The interface(s) facilitates communication of the payment modules 106, or central server 102, or domestic servers 104 coupled to the sink device. The interface(s) also provides a communication pathway for one or more components of the CCD and devices. Examples of such components comprise, but are not limited to, processing engine(s) 208 and database 224. The interface comprises a platform for communication with the devices/servers to read real-time data /write data in the paymet modules 106, or central server 102, or domestic servers 104, respectively, and to communicate with the other devices. Interfaces comprise a Graphical interface that allows user to feed inputs, to type/write/ upload the data and certificates, and other software and hardware interfaces, for example, interfaces for peripheral device(s), such as a keyboard, a mouse, an external memory, and a printer.

In an embodiment, the computer system 400 can include a communication unit operatively coupled to a secured processor 470. The communication unit can be configured to be communicatively coupled to the payment modules 106, or central server 102, or domestic servers 104 through the network.

A person skilled in the art will appreciate that computer system 400 may include more than one processor and communication ports. Examples of processor 470 include, but are not limited to, an Intel^{®} Itanium@ or Itanium 2 processor(s), or AMD^{®} Opteron@ or Athlon MP^{®} processor(s), Motorola^{®} lines of processors, FortiSOC^{™} system on a chip processors or other future processors. Processor 470 may include various modules associated with embodiments of the present invention. Communication port 460 can be any of an RS-232 port for use with a modem-based dialup connection, a 10/100 Ethernet port, a Gigabit or 10 Gigabit port using copper or fiber, a serial port, a parallel port, or other existing or future ports. Communication port 760 may be chosen depending on a network, such a Local Area Network (LAN), Wide Area Network (WAN), or any network to which the computer system connects.

In an embodiment, the memory 430 can be Random Access Memory (RAM), or any other dynamic storage device commonly known in the art. Read only memory 740 can be any static storage device(s) e.g., but not limited to, a Programmable Read Only Memory (PROM) chips for storing static information e.g., start-up or BIOS instructions for processor 470. Mass storage 460 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc. Further, Inc can include but not limited to: cloud which may include private, public, hybrid type of cloud services, storages and allied components supporting cloud.

In an embodiment, the bus 420 communicatively couples the processor(s) 470 with the other memory, storage, and communication blocks. Bus 720 can be, e.g. a Peripheral Component Interconnect (PCI) / PCIExtended (PCI-X) bus, Small Computer System Interface (SCSI), USB or the like, for connecting expansion cards, drives, and other subsystems as well as other buses, such a front side bus (FSB), which connects processor 470 to a software system.

In another embodiment, operator and administrative interfaces, e.g. a display, keyboard, and a cursor control device, may also be coupled to bus 420 to support direct operator interaction with computer system 400. Other operator and administrative interfaces can be provided through network connections connected through communication port 460. External storage device 410 can be any kind of external hard-drives, floppy drives, IOMEGA^{®} Zip Drives, Compact Disc - Read Only Memory (CD-ROM), Compact Disc - Re-Writable (CD-RW), Digital Video Disk - Read Only Memory (DVD-ROM). Components described above are meant only to exemplify various possibilities. In no way should the aforementioned exemplary computer system limit the scope of the present disclosure.

If the specification states a component or feature "may", "can", "could", or "might" be included or have a characteristic, that particular component or feature is not required to be included or have the characteristic.

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

Moreover, in interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

While the foregoing describes various embodiments of the invention, other and further embodiments of the invention may be devised without departing from the basic scope thereof. The scope of the invention is determined by the claims that follow. The invention is not limited to the described embodiments, versions or examples, which are comprised to enable a person having ordinary skill in the art to make and use the invention when combined with information and knowledge available to the person having ordinary skill in the art.

### ADVANTAGES OF THE INVENTION

The proposed invention overcomes the drawbacks, shortcomings, and limitations associated with existing international transactions for domestic payment schemes.

The proposed invention provides flexibility to domestic payment schemes to provide customers with secure, affordable, seamless International and multi-currency cards, card-on-file, tokenized transaction processing, ATM transactions, and all other channels such as Host card emulation (HCE), eSE, E-Commerce (eCOM), and Quick Response (QR), and InApp channels.

The proposed invention provides a unified platform to connect worldwide domestic payment schemes for all card and online-based transactions.

The proposed invention implements a secured, specific cryptogram generation and verification by participating domestic schemes. Further, additional security artifact is provided for enabling end-to-end security.

The proposed invention provides an improved and secured platform for international transactions for domestic payment schemes including transactions and services such as payments, balance enquiry, reversals, advice, foreign exchange (FX) conversions, FX settlements, reporting, and other services.

The proposed invention facilitates international financial transactions by providing better prices and favorable fees for domestic customers and domestic schemes.

The proposed invention enables efficient international multi-currency and multi-channel financial transactions across borders and promotes various online platforms.

It is an object of the present disclosure to extend the reach of domestic payment schemes outside of regional boundaries and make it acceptable across several countries for multi-currency transactions.

## Claims

1. A system (100) for enabling multi-channel, multi-currency international transactions for domestic payment schemes, the system (100) comprising:
One or more domestic servers (104) associated with one or more domestic payment schemes (126), wherein one or more issuers (110) are associated with each of the domestic payment schemes (126);
one or more payment modules (106) associated with each of the domestic payment schemes (126), the one or more payment modules (106) are in communication with the corresponding domestic server (104); and
a central server (102) associated with a central inter-transact HUB which is in communication with the one or more domestic servers (104) associated with one or more domestic payment schemes (126), the central server (102) comprising a processor (202) coupled to a memory (204) storing instructions executable by the processor (204),
wherein the central server (102) is configured to:
receive a first set of secured transaction messages from the one or more domestic servers (104), wherein the first set of secured transaction messages pertains to a transaction initiated by one or more registered users (108) at the one or more payment modules (106) in one or more countries, wherein the first set of secured transaction messages are validated using cryptogram and encryption, upon identification of international transaction details by the one or more payment modules (106);
identify, based on the first set of secured transaction messages, the domestic payment scheme (126) and the issuer (110) where the corresponding user (108) initiating the transaction is associated with or registered;
redirect the first set of secured transaction messages to the identified domestic payment scheme (126) of the corresponding user (108); and
enable the identified domestic payment scheme (126) of the corresponding user (108) to send a transaction request to the issuer (110) associated with the corresponding user (108);
enable the issuer (110) of the user (108) to initiate and complete the transaction in response to the transaction request, wherein the transaction comprises at least one of a financial transaction and a non-financial transaction; and
facilitate the domestic server (104) associated with the issuer (110) of the user (108) to complete the transaction at the payment module (106) where the international transaction is initiated by the user (108).

2. The system (100) as claimed in claim 1, wherein the one or more domestic servers (104) are configured to:
identify the initiation of the international transaction by the user (108) based on the transaction request received at the issuer (110) of the corresponding user (108); and
process the first set of secured transaction messages to perform verification of the cryptogram and encryption associated with the transaction details and correspondingly generate a second set of secured transaction messages comprising a response cryptogram, and encryption envelope for the transaction made by the issuer (110) in response to the transaction request.

3. The system (100) as claimed in claim 2, wherein the central server (102) is configured to:
receive the second set of secured transaction messages from the domestic server (104) associated with the issuer (110) of the registered user (108);
identify, based on the second set of secured transaction messages, the domestic payment scheme (126) and the respective domestic server (104) of the respective payment module (106) where the international transaction is initiated by the registered user (108);
redirect the second set of secured transaction messages to the identified domestic server (104) of the respective payment module (106) where the international transaction is initiated; and
enable, based on the second set of secured transaction messages, the identified domestic payment scheme (126) to complete the transaction at the respective payment module where the international transaction is initiated by the corresponding user (108).

4. The system (100) as claimed in claim 1 or any of claims 1 to 3, wherein each of the payment modules (106) is configured to:
allow the one or more registered users (108) associated with the one or more issuers (110) to initiate the transaction in the one or more countries;
extract the transaction details upon initiation of the transaction by the one or more registered users (108) at a corresponding payment module (106);
recognize initiation of the international transaction by the one or more registered users (108) based on the extracted transaction details; and
facilitate generation of cryptogram and encryption using the transaction details upon recognition of the international transaction initiation, and correspondingly generate and transmit the first set of secured transaction messages to the domestic server (104) of the respective payment module (106) where the international transaction is routed., wherein the cryptogram is generated by a registered card associated with the user (108).

5. The system (100) as claimed in claim 1 or any of claims 1 to 4, wherein the one or more payment modules (106) comprises any or a combination of a Point-of-Sale (POS) terminal, and ATM, and the transaction made by the registered user is initiated at the payment module (106) upon scanning and authentication of a registered card having unique identifiers at the respective payment modules (106).

6. The system (100) as claimed in claim 1 or any of claims 1 to 3, wherein the one or more payment modules (106) comprise any or a combination of an eCOM portal, a Payment gateway, a payment wallet, a host card emulation (HCE), an InApp payment, a QR-based payment, and tokenized payments, wherein a registered card of the user is authenticated and tokenized at the respective payment modules (106) during card enablement, and the transaction made by the registered user is initiated at the one or more payment modules (106) upon selection of the registered card and/or the tokenized card.

7. A method (300) for enabling multi-channel, multi-currency international transactions for domestic payment schemes, the method (300) comprising the steps of:
receiving, by a central server (102) associated with a central inter-transact hub that is in communication with one or more domestic servers (104) associated with one or more payment schemes (!26), a first set of secured transaction messages from the one or more domestic servers (104), wherein the first set of secured transaction messages pertains to a transaction initiated by one or more registered users (108) at one or more payment modules (106) in one or more countries, wherein the first set of secured transaction messages are validated using cryptogram and encryption, based on identification of international transaction details by the one or more payment modules (106);
identifying, by the central server (102), based on the first set of secured transaction messages, the domestic payment scheme (126) and the one or more issuers (110) where the corresponding user (109) initiating the transaction is associated with or registered;
redirecting, by the central server (102), the first set of secured transaction messages to the identified domestic payment scheme (126) of the corresponding registered user (108);
enabling, by the central server (102), the identified domestic payment scheme (126) of the corresponding registered user (108) to send a transaction request to the issuer (110) associated with the registered user (108);
enabling, by the central server (102), the issuer (110) of the registered user (108) to initiate and complete the transaction in response to the transaction request, wherein the transaction comprises at least one of a financial transaction and a non-financial transaction, and
facilitating, by the central server (102), the domestic server (104) associated with the issuer (110) of the registered user to complete the transaction at the one or more payment modules (106) where the international transaction is initiated.

8. The method (300) as claimed in claim 7, wherein the method (300) comprises the steps of:
identifying, by the one or more domestic servers (104), the initiation of the international transaction by the registered user (108) based on the transaction request received at the issuer (110) of the registered user; and
processing, by the one or more domestic servers (104), the first set of secured transaction messages to perform verification of the cryptogram and encryption associated with the transaction details and correspondingly generating a second set of secured transaction messages comprising a response cryptogram, and encryption envelope for the transaction made by the issuer (110) in response to the transaction request.

9. The method (300) as claimed in claim 8, wherein the method (300) comprises the steps of:
receiving, by the central server (102), the second set of secured transaction messages from the domestic server (104) associated with the issuer of the registered user (108);
identifying, by the central server (102), based on the second set of secured transaction messages, the domestic payment scheme and the respective domestic server of the respective payment module where the international transaction is initiated by the registered user (108);
redirecting, by the central server (102), the second set of secured transaction messages to the identified domestic server (104) of the respective payment module (106) where the international transaction is initiated; and
enabling, by the central server (102), based on the second set of secured transaction messages, the identified domestic payment scheme (126) to complete the transaction at the respective payment module (106) where the international transaction is initiated by the registered user (108).

10. The method (300) as claimed in claim 7, wherein the method (300) comprises the steps of:
allowing, at the one or more payment modules (106) associated with the one or more domestic payment schemes (126), the one or more registered users (108) associated with the one or more issuers (110) of the one or more domestic payment schemes (126) to initiate the transaction in the one or more countries;
extracting, by the one or more payment modules (106), the transaction details upon initiation of the transaction by the one or more registered users (108) at the corresponding payment module (106);
recognizing, by the one or more payment modules (106), initiation of the international transaction by the one or more registered users (108) based on the extracted transaction details; and
facilitate generation, by the one or more payment modules (106), of cryptogram and encryption using the transaction details upon recognition of the international transaction initiation, and correspondingly generating and transmitting the first set of secured transaction messages to the domestic server (104) of the respective payment module (106) where the international transaction is initiated.
